(19) Europäisches Patentamt

European Patent Office

Office européen des brevets

(11) EP 0 755 851 A2

## (12) EUROPÄISCHE PATENTANMELDUNG

(43) Veröffentlichungstag:
29.01.1997 Patentblatt 1997/05

(51) Int. Cl.⁶: **B62J 15/00**

(21) Anmeldenummer: 96110998.0

(22) Anmeldetag: 09.07.1996

(84) Benannte Vertragsstaaten:
**BE CH DE FR IT LI NL**

(30) Priorität: **28.07.1995 DE 19527639**

(71) Anmelder: **ESGE-Marby GmbH + Co. KG.**
**D-33729 Bielefeld (DE)**

(72) Erfinder: **Spingler, Christian**
**33729 Bielefeld (DE)**

(74) Vertreter: **Patentanwälte Rüger, Barthelt & Abel**
**Webergasse 3**
**73728 Esslingen (DE)**

(54) **Schutzblech mit Stromversorgung**

(57) Bei einem Kunststoffschutzblech (1), das etwa mittig wenigstens eine Metallfolie enthält, ist in Nachbarschaft zu der Metallfolie ein elektrischer Leiter (9) angeordnet, dessen Dicke erheblich größer ist als die der Metallfolie. Die Dicke ist dabei so groß, daß der bei einer den Leiter (9) durchtrennenden Öffnung (19) gemessene mechanische Widerstand gegen radiale Aufweitung der Öffnung (19) an den Schnittflächen des geschnittenen Leiters (9) deutlich größer ist als der Widerstand des übrigen Kunststoffschutzbleches (1).

Dieser Bemessungsregel folgend können dickere Kupferstreifen oder Kupferdrähte mit Durchmessern ab 0,2 mm als Leiter verwendet werden. Eine Kontaktierung nach außen wird mittels einer in die genannte Öffnung (9) eingesetzten und mit dem Schutzblech (1) vernieteten oder anderweitig verbundenen Buchse hergestellt, an deren Außenumfang die Schnittflächen des Leiters (9) unter Druck anliegen.

Fig. 1

## Beschreibung

Die Erfindung betrifft ein Schutzblech, das insbesondere als Radkotschützer für Zweiräder, wie Fahrräder, Mofas oder dergleichen, verwendbar ist.

Sowohl aus optischen als auch aus Gewichtsgründen werden für Zweiradfahrzeuge, insbesondere für leichte Fahrräder, häufig Radkotschützer aus Kunststoff verwendet, die sowohl leicht als auch fest sind.

Aus optischen Gründen enthalten derartige Schutzbleche eine in den ansonsten durchsichtigen Kunststoff eingebettete Aluminiumfolie. Schutzbleche, insbesondere Hinterradschutzbleche, tragen häufig Rücklichter, die einer entsprechenden Stromzuführung bedürfen. Diese erfolgt über einen gesonderten isolierten Draht oder eine entsprechende Litze, wobei die Rückleitung (Masse) über Metallstreben erfolgt, die das Schutzblech halten. Letzteres ist auch bei Schutzblechen aus Plastik der Fall, wobei dann das Rücklicht entsprechend mit der betreffenden Metallstrebe verbunden werden muß.

Die der Stromzuführung zu dem Rücklicht dienende Litze muß gesondert verlegt werden, was häufig unbequem oder auch schwierig realisierbar ist. Darüber hinaus sind solche Litzenverbindungen störanfällig. Bei rauherem Einsatz werden sie leicht beschädigt.

Bei Kunststoffschutzblechen ist es deshalb versucht worden, die Stromzuführung direkt über das Schutzblech zu erreichen. Bspw. ist aus der DE 34 20 960 A1 ein Radkotschützer bekannt, der durch einen Kunststoffkörper gebildet ist, in dem eine Metallfolie angeordnet ist. Der die äußere Form des Radkotschützers oder Schutzbleches bestimmende Kunststoffkörper enthält eine Metallfolie zur kabelfreien Stromzuführung für eine elektrische Einrichtung, wie bspw. eine Fahrradbeleuchtung. Sowohl zum Einspeisen von Strom in die Metallfolie als auch zum Ausleiten von Strom aus derselben ist der Radkotschützer jeweils mit einem die Kunststoffolie durchsetzenden Loch versehen, in dem eine metallische Buchse sitzt. Diese ist durch Schraub- oder Nietverbindung an bzw. in dem Loch gesichert. An ihrer Außenseite ist die Buchse mit Vorsprüngen, wie bspw. einer Rändelung, versehen, die beim Einsetzen der Buchse in das betreffende Loch einen elektrischen Kontakt zwischen der Buchse und der Metallfolie herstellen.

Sowohl durch mechanische Belastung als auch durch chemischen Angriff kann es zu Kontaktschwierigkeiten kdmmen. Nach einer langen Betriebszeit kann die elektrische Kontaktstelle zerstört werden, was zum Ausfall des betreffenden Rücklichtes führt. Die Ursachen für diesen Ausfall konnten bislang nicht im einzelnen aufgeklärt werden.

Davon ausgehend ist es Aufgabe der Erfindung, ein Schutzblech aus Kunststoff mit einer elektrisch leitfähigen Einlage zu schaffen, das eine größere Kontaktsicherheit bietet.

Diese Aufgabe wird erfindungsgemäß durch ein Schutzblech mit den Merkmalen des Anspruches 1 oder 17 gelöst.

In den als Radkotschützer dienenden Kunststoffkörper sind eine Metallfolie und wenigstens ein aus Metall bestehender Leiter eingelagert, der deutlich dicker als die Metallfolie ausgebildet ist. Dieser Leiter wird vorzugsweise durch ein oder mehrere parallel zueinander geführte Drähte, wie bspw. Kupferlackdrähte oder blanke Kupferdrähte, gebildet, die dicker als die Metallfolie sind. Dies bedeutet, daß der Drahtdurchmesser, d.h. die Dicke des betreffenden Leiters, 5 bis 15 mal so groß ist wie die Foliendicke. Während die Metallfolie beidseitig stoffschlüssig mit dem umgebenden Kunststoffkörper verbunden ist und eine Zwischenschicht ohne eigene Steifigkeit bildet, ist der ebenfalls von dem Kunststoff umgebene Leiter relativ massiv. Der Elastizitätsmodul und die Druckfestigkeit des Leitermetalls sind höher als die entsprechenden Größen des Kunststoffes. Wegen der Dicke des Leiters kann an einer Schnittstelle, wie einem die Drähte schneidenden Loch, in Radialrichtung elastisch zurückweichender Kunststoff den Draht nicht deformieren. Der Kontaktdruck zwischen dem Leiter und einem Kontaktkörper ist erhöht und der elektrische Kontakt ist sicher.

Ein solches Schutzblech bietet deshalb eine gute Kontaktsicherheit bei elektrischer Kontaktierung, wenn der wenigstens eine von dem Kunststoffkörper umschlossene Leiter angeschlossen und zur Stromversorgung genutzt wird.

Das Schutzblech ist gewöhnlich so ausgebildet, daß es der Wölbung eines abzudeckenden Rades folgt, so daß es in Seitenansicht kreisbogenförmig gekrümmt ist. Sowohl die Metallfolie als auch der dickere oder massivere elektrische Leiter erstreckt sich vorzugsweise über die gesamte Länge des Schutzbleches, so daß elektrische Kontaktstellen je nach Einsatz des verwendeten Schutzbleches entlang desselben willkürlich festgelegt werden können. Der Leiter kann ein Metallstreifen entsprechender Dicke, ein einzelner Runddraht, ein Flachdraht, ein Bündel mehrerer parallel geführter Drähte oder ähnliches sein. Wesentlich ist, daß die Dicke des betreffenden Leiters so groß ist, daß elastische Deformationen des Kunststoffes nicht vollständig auf den Leiter übertragen werden. Wird dann zur äußeren Kontaktierung ein den Leiter durchtrennendes Loch in das Schutzblech gestanzt, liegen die Schnittflächen des Leiters in der Wandung des gestanzten Loches frei. Bei ausreichender Dicke des Leiters ist der Widerstand des Leiters gegen an seiner Schnittfläche angreifende Druckkräfte deutlich höher als der des umgebenden Kunststoffes oder der darin eingebetteten Metallfolie. Dies ermöglicht einen zuverlässigen elektrischen Kontakt zu einer in die Öffnung eingesetzten Buchse. Außerdem kann die Schnittfläche des Drahtes durch den Stanzvorgang etwas vergrößert sein, was die Kontaktfläche vergrößert.

Der elektrische Leiter kann über seine gesamte Länge sowohl mit der Metallfolie in elektrischem Kontakt stehen als auch von dieser isoliert sein. Die isolierte Variante ermöglicht es, als Leiter Kupferlackdraht zu verwenden, dessen Lackbeschichtung eine gute Verbindung zwischen dem Kunststoff und dem Leitermaterial herstellt. Dies kann der Kontaktsicherheit zwischen dem Leiter und einer diesen durchschneidenden Buchse zugute kommen. Druckkräfte, die an der Kontaktstelle auf den Leiter ausgeübt werden, verursachen Kompressionsspannungen über einen größeren Bereich bis zu 1 cm. Wegen der höheren Elastizität wird der Druck durch Zusammendrücken des Kunststoffes in einem wenige Millimeter messenden Bereich aufgenommen. Die Verbindung zwischen Kunststoff und Leiter bewirkt, daß der Kunststoff den Leiter unterstützt und die Kontaktkraft erhöht. Diese soll zum Erreichen einer guten Kontaktsicherheit möglichst groß sein und sie wird von dem umgebenden Kunststoff über eine Länge von einigen Millimetern bis Zentimetern des Kupferlackdrahtes von dem Kunststoff aufgenommen, der die Kontaktstelle somit unterstützt.

Eine elektrische Verbindung zwischen der Metallfolie und dem elektrischen Leiter ermöglicht hingegen eine zusätzliche Nutzung der Metallfolie als Leiter, was die Strombelastbarkeit erhöht.

Die betreffende, zum Einsetzen einer Kontaktbuchse dienende Öffnung ist vorzugsweise ein gestanztes Loch, das weitgehend glattwandig ist. Jedoch kann bei dem Stanzvorgang aufgrund der unterschiedlichen Festigkeiten von Kunststoff und Leitermaterial ein mikroskopischer Überstand des Leitermateriales über die Lochwandung erreicht werden. Dies kommt der Kontaktsicherheit zugute. Wird in die Öffnung ein Kontaktkörper eingesetzt, liegen die Schnittflächen des elektrischen Leiters fest an der Außenwand des Kontaktkörpers an. Damit wird im Vergleich zum Stand der Technik, bei dem ein Kontaktkörper mit einem folienförmigen Leiter in Verbindung gebracht worden ist, lediglich eine Kontaktstelle erreicht, die auf die Querschnittsfläche des durchtrennten elektrischen Leiters beschränkt ist. Obwohl die Kontaktstelle somit örtlich eng begrenzt ist und einen geringeren Flächeninhalt aufweisen kann als der herkömmliche ringförmige Kontakt zu einem folienförmigen Leiter, ist die Kontaktsicherheit erhöht. Sowohl die mechanische Empfindlichkeit als auch die Empfindlichkeit gegen Korrosion sind deutlich herabgesetzt.

Zum Erreichen hoher Kontaktsicherheit ist der buchsenförmige Kontaktkörper im Preßsitz in die Öffnung eingesetzt. Dabei ist jedoch darauf zu achten, daß das Übermaß des Kontaktkörpers nicht zu einer solchen Deformierung des Lochbereiches führt, daß eine Trennung des Kunststoffes von der eingelagerten Folie oder dem Leiter zustande kommt.

Bei sorgfältiger Abstimmung des Durchmessers der gestanzten Öffnung auf den Außendurchmesser der einzusetzenden Buchse werden mit einer im Bohrungsbereich an ihrer Außenseite glatten Buchse sehr gute langzeitstabile elektrische Kontaktgaben erreicht. Jedoch kann die Buchse, insbesondere, wenn die Toleranzen etwas größer sein sollen, an ihrer Außenseite eine Rändelung aufweisen.

Der als Buchse ausgebildete Kontaktkörper und der in das Kunststoffschutzblech eingebettete elektrische Leiter haben vorzugsweise ein gleiches oder ähnliches elektrochemisches Potential. Dies kann bei Kupferleitern dadurch erreicht werden, daß eine Buchse auf der Basis einer Kupfer-Nickellegierung verwendet wird. Selbst bei chemischem Angriff an der Kontaktstelle ist ein Totalausfall des Kontaktes nicht wahrscheinlich. Die Verwendung von Kupfer hat hier außerdem den Vorteil, daß die entstehenden Oxyde keine elektrischen Isolatoren sind.

Es hat sich als vorteilhaft erwiesen, die neben dem elektrischen Leiter in den Kunststoffkörper eingebettete Metallfolie aus einem Material herzustellen, das deutlich unedler als die Buchse und der Leiter ist. Die Folie wirkt bei chemischem Angriff als Opferanode, die die Kontaktstelle über lange Zeit hinweg schützt. Daneben quillt die Metallfolie durch die mit der Oxydation verbundene Volumenzunahme gewissermaßen auf, wodurch sie den Druck auf die Wandung der Buchse verstärkt und die Kontaktstelle nach außen hin abdichtet. Schon eine geringfügige Oxydation der Metallfolie kann dadurch einen nach außen hin nicht ganz dichten Spalt zwischen der Öffnung und der Außenseite der Buchse abdichten, wodurch weitere Oxydation unterbleibt.

In der Zeichnung sind Ausführungsbeispiele der Erfindung dargestellt. Es zeigen:

Fig. 1 ein Kunststoffschutzblech mit eingelagerten Metallfolien und eingelagerten elektrischen Leitern, in einer vergrößerten, ausschnittsweisen, perspektivischen Darstellung,

Fig. 2 das Schutzblech nach Fig. 1 geschnitten entlang der Linie II-II und mit einem als Buchse ausgebildeten Kontaktkörper versehen,

Fig. 3 das Kunststoffschutzblech nach Fig. 1, geschnitten entlang der Linie III-III in Fig. 1, in einer ausschnittsweisen, perspektivischen Darstellung und in einem anderen Maßstab und

Fig. 4 das Kunststoffschutzblech nach Fig. 2 mit einer anderen Ausführungsform eines elektrischen Kontaktkörpers in Schnittdarstellung.

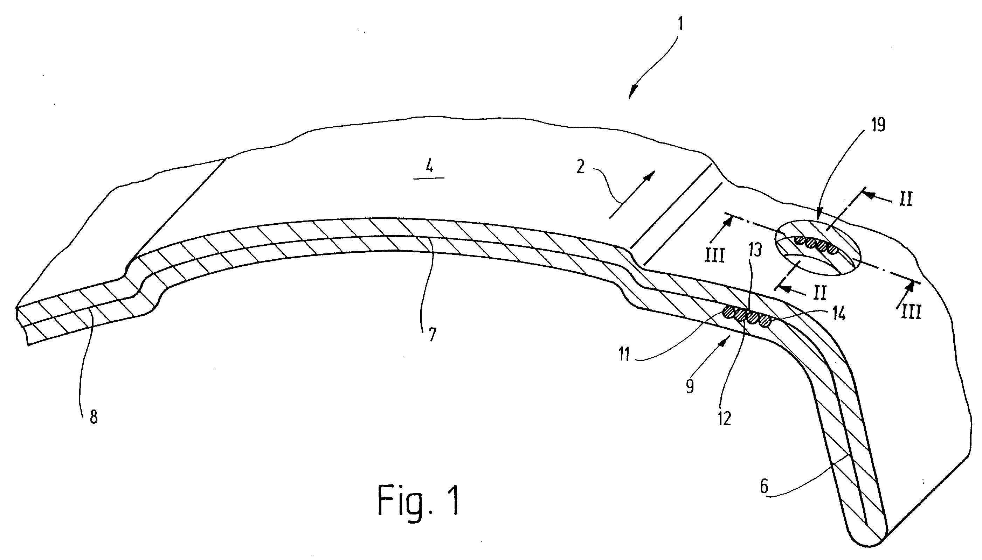

In Fig. 1 ist ein Radkotschützer oder Schutzblech 1 aus Kunststoff im Ausschnitt dargestellt, wie es bspw. als Radabdeckung bei Fahrrädern verwendet wird. Das sich üblicherweise über einen gewissen Umfangsbereich des abzudeckenden Rades erstreckende Schutzblech 1 folgt dem Radumfang bogenförmig in Umfangsrichtung, die die Längsrichtung des gekrümmten Schutzbleches 1 darstellt. Die Längs- oder Umfangsrichtung ist in Fig. 1 durch einen Pfeil 2 angedeutet. Das in Querrichtung zu seiner eigenen Aussteifung und zur Abdeckung des nicht weiter dargestellten Rades gekrümmte Schutzblech 1 ist im wesentlichen von einem Kunststoffkörper 4 gebildet, der die äußere Kontur des Schutzbleches 1 bestimmt und der als einstückiger Grundkörper ausgebildet ist.

In den Kunststoffkörper 4 sind insgesamt drei Metallfolien 6, 7, 8 eingebettet, die sich ungefähr mittig in Längsrichtung 2 über die gesamte Länge des gekrümmten Kunststoffkörpers 4 erstrecken. Die Metallfolien 6, 7, 8 sind Aluminiumfolien von 0,05 bis 0,1 mm Dicke, die stoffschlüssig mit dem umgebenden Kunststoff verbunden sind. Die Metallfolien 6, 7, 8 liegen dabei nicht exakt mittig in dem Kunststoffkörper 4, sondern geringfügig zur Außenseite hin versetzt, so daß die dickere Kunststoffschicht zu dem Rad hin weist.

In einem seitlichen Bereich des Kunststoffkörpers 4 ist ein elektrischer Leiter 9 angeordnet, der aus vier parallel zueinander in den Kunststoff eingebetteten Drähten 11, 12, 13, 14, vorzugsweise Kupferlackdrähten, gebildet ist. Die Drähte 11, 12, 13, 14 weisen jeweils einen Durchmesser auf, der größer ist als die Dicke der Metallfolie 6 und im einzelnen etwa das zehnfache beträgt. Die Dicke ist dabei wenigstens so groß bemessen, daß eine gleichmäßige Druckbelastung des Kunststoffkörpers 4 bei einer die Drähte 11, 12, 13, 14 schneidenden Fläche dazu führt, daß die dort geschnittenen Drähte 11, 12, 13, 14 über die im übrigen etwas komprimierte Umgebung hervorstehen, die von der Schnittfläche des Kunststoffkörpers 4 gebildet wird. Dieser Effekt wird ab einem bestimmten Drahtdurchmesser erreicht, bei dem das Verhältnis zwischen Querschnittsfläche und Drahtumfang einen Grenzwert überschritten hat. Dieser Grenzwert wird von Kupferlackdraht mit dem Durchmesser von 0,25 mm überschritten und liegt, wenn als Leiter Kupferlackdraht mit rundem Querschnitt und als Kunststoff Zelluloseacetobutyrat verwendet wird bei A/U = 0,06 mm .

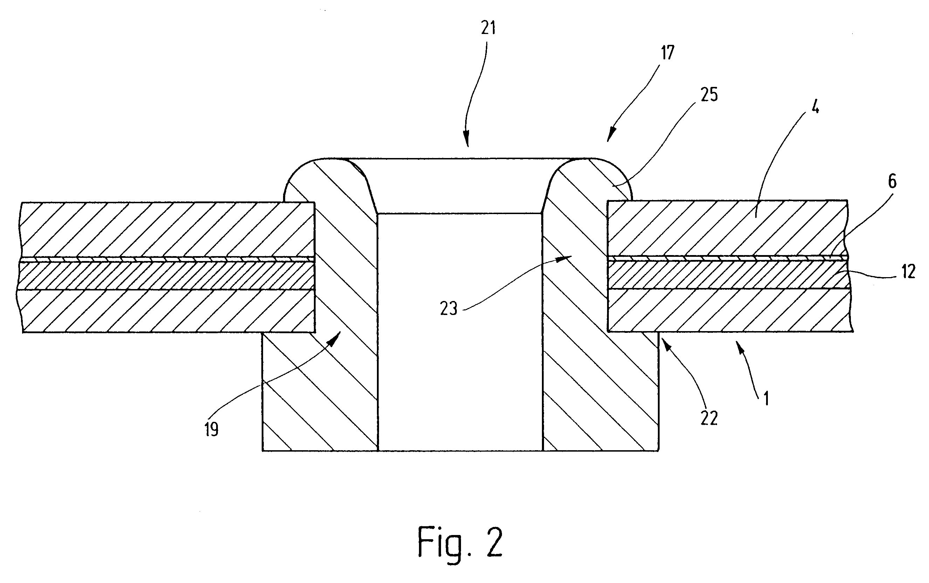

In dem Kunststoffkörper 4 ist zum Anschluß eines aus Fig. 2 im Querschnitt hervorgehenden Kontaktkörpers 17 eine kreisrunde Öffnung 19 vorgesehen, die den Leiter 9 und damit die Drähte 11, 12, 13, 14 schneidet und durchtrennt. Die Öffnung 19 ist zylinderförmig und weist eine glatte Innenwand auf. Die von der Öffnung 19 gleichfalls geschnittene Metallfolie 6 bildet einen dünnen Metallring in Umfangsrichtung. Die Schnittflächen der Drähte 11, 12, 13, 14 hingegen sind im wesentlichen rund und liegen einander eng benachbart unterhalb der Metallfolie 6 in der Wandung. Aufgrund der höheren Festigkeit des Leitermaterials gegenüber dem Kunststoffmaterial kann bei bestimmten Ausführungsformen und bei entsprechender Ausführung eines Stanzvorganges zum Herstellen der Öffnung 19 ein gewisser mikroskopischer Überstand der Schnittflächen der Drähte 11, 12, 13, 14 über die übrige Bohrungswandung erreicht werden.

Der aus Fig. 2 hervorgehende Kontaktkörper 17 ist als Buchse mit einer zentralen Öffnung 21 ausgebildet und liegt von der Innenseite her mit einer Ringschulter 22 an dem Schutzblech 1 an. Mit einem an seiner Außenseite zylindrischen Abschnitt 23 sitzt der Kontaktkörper 17 in der Bohrung 19. Endseitig steht der zylindrische Abschnitt 23 über dem Kunststoffkörper 4 vor, wobei durch Vernieten ein ringförmiger Setzkopf 25 ausgebildet ist, der den Kontaktkörper 17 an dem Kunststoffkörper 4 hält. Der Kunststoffkörper 4 ist dabei zwischen dem Setzkopf 25 und der Ringschulter 22 geklemmt. Infolge einer Preßpassung zwischen dem zylindrischen Abschnitt 23 und der Innenwand der Bohrung 19 und infolge der Klemmung des Kunststoffteiles zwischen dem Setzkopf 25 und der Ringschulter 22 ist der Kontaktkörper 17 fest an dem Kunststoffkörper 4 gehalten.

Der in die Bohrung 19 eingesetzte Kontaktkörper 17 ist mit den Drähten 11, 12, 13, 14 kontaktiert. Der Kontaktkörper 17 ist im Vergleich zu dem eher nachgiebig ausgebildeten Kunststoffkörper 4 starr ausgebildet. Beim Einpressen des zylindrischen Abschnittes 23 des Kontaktkörpers 17 in die Öffnung 19 gibt der Kunststoffkörper 4 in, bezogen auf die Öffnung 19, radialer oder seitlicher Richtung nach. Dabei nimmt der Kunststoffkörper 4 die Metallfolie 6 radial mit nach außen, wobei die deutlich steiferen Drähte 11, 12, 13, 14 für die Ausweichbewegung eines weitaus größeren Druckes bedürfen. Es entsteht deshalb eine hohe Flächenpressung zwischen den Schnittflächen der Drähte 11, 12, 13, 14 und der Außenseite des zylindrischen Abschnittes 23 des Kontaktkörpers 17. Die Flächenpressung bleibt dauerhaft erhalten, so daß der dabei entstandene elektrische Kontakt widerstandsfähig gegen Erschütterungen und langzeitstabil ist.

Zwischen dem Kontaktkörper 17 und den vier zu dem nächsten Kontaktkörper abgehenden Drähten 11, 12, 13, 14 sind vier Kontaktpunkt vorhanden, die jeweils für sich unter hohem Kontaktdruck stehen. Die gegenüber liegenden Kontaktpunkte mit den jeweils gegenüber liegenden Schnittflächen der geschnittenen Drähte 11, 12, 13, 14 tragen, wenn kein elektrischer Kontakt zu der Metallfolie 6 besteht, nicht zum Stromfluß bei. Wenn jedoch die Drähte 11, 12, 13, 14 blank sind und wenigstens abschnittsweise an der Metallfolie 6 anliegen, verbindet die Metallfolie 6 die durch die Öffnung 19 unterbrochenen Drähte 11, 12, 13, 14 wieder miteinander. Beispielsweise werden die beiden Abschnitte, in die der Draht 11 durch die Bohrung 19 unterteilt ist, durch die Metallfolie 6 elektrisch miteinander verbunden. Gleiches gilt für die weiteren Drähte 12, 13, 14. Dadurch stehen zum Stromübergang insgesamt acht Kontaktstellen zur Verfügung, was die Zuverlässigkeit nochmals erhöht. Demgegenüber hat der Kontakt zwischen der Metallfolie 6 und der Außenseite des zylindrischen Abschnittes 23 des Kontaktkörpers 17 keine Bedeutung für den Stromübergang. Die Metallfolie 6 wird von dem elastisch nachgebenden Kunststoffkörper 4 federnd mitgenommen, wenn der Kontaktkörper 17 in die Öffnung 19 eingesetzt wird. Somit ist kein nennenswerter Kontaktdruck und erst recht kein gegenüber dem übrigen auf die Wandung ausgeübten Druck erhöhter Druck zwischen der Metallfolie 6 und dem Kontaktkörper 17 vorhanden.

Die Metallfolie 6 ist vorzugsweise eine Aluminiumfolie, während der Kontaktkörper 17 vorzugsweise aus einem edleren Material wie bspw. einer Kupfernickellegierung besteht. Die Kupfernickellegierung ist dabei so gewählt, daß deren elektrochemisches Potential etwa dem der aus Kupfer bestehenden Drähte 11, 12, 13, 14 entspricht. Gegebenenfalls ist es geringfügig niedriger oder höher. Die demgegenüber unedle Aluminiumfolie kann insbesondere, wenn ein elektrischer Kontakt zu den Drähten 11, 12, 13, 14 besteht, als Opferanode wirken. Bei eindringender Feuchtigkeit schützt sie dadurch die zwischen den Schnittflächen der Drähte 11, 12, 13, 14 und der Außenfläche des zylindrischen Abschnittes 23 des Kontaktkörpers 19 ausgebildeten Kontakte. Das dabei entstehende Aluminiumhydroxid nimmt ein wesentlich größeres Volumen ein als die kompakte Aluminiumfolie, was zu einer starken Erhöhung des Wanddruckes auf den Kontaktkörper 17 führt. Damit quellen evtl. vorhandene Spalte gewissermaßen zu, wodurch die Berührungsstellen zwischen den Drähten 11, 12, 13, 14 und dem Kontaktkörper 17 vor weiter eindringender Feuchtigkeit und somit vor Korrosion geschützt werden. Außerdem kann das entstehende Aluminiumhydroxid ggf. vorhandene Spalte ausfüllen und somit abdichten.

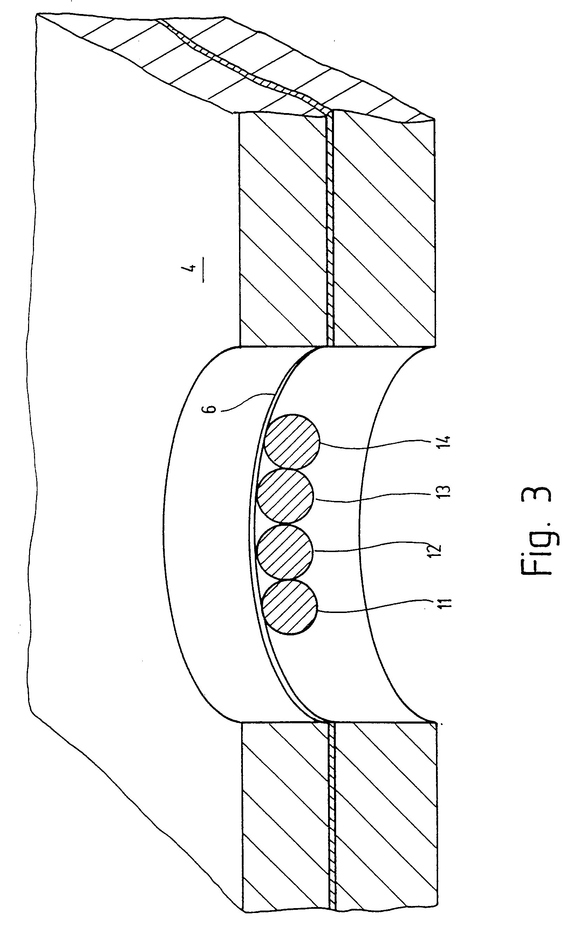

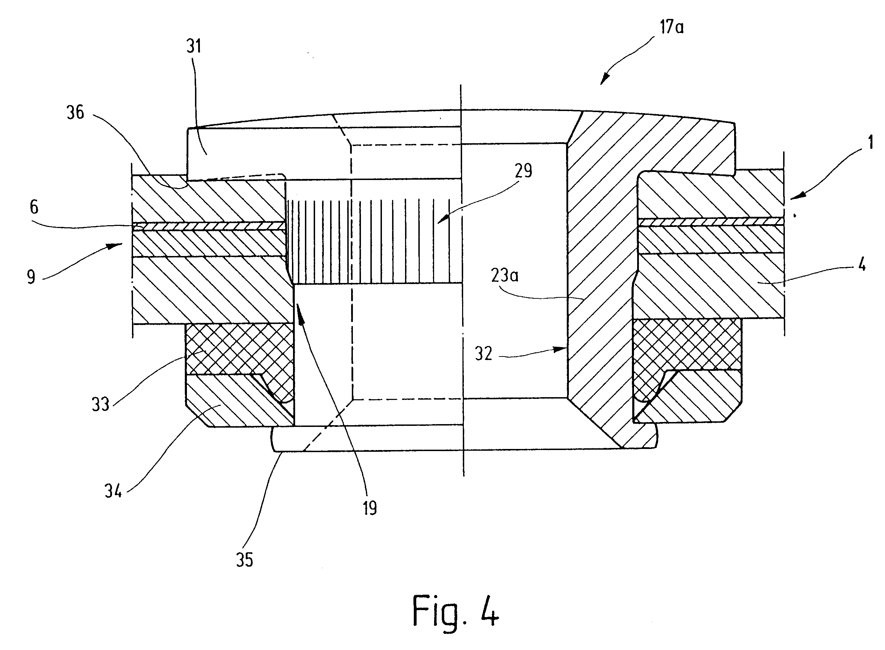

Ein weiteres Ausführungsbeispiel der Erfindung ist in Fig. 4 dargestellt. Das aus Kunststoff bestehende Schutzblech 1 weist den bereits im Zusammenhang mit den Fig. 1, 2 und 3 beschriebenen Kunststoffkörper 4 mit der Metallfolie 6 und dem Leiter 9 auf. Das in Fig. 4 dargestellte Ausführungsbeispiel unterscheidet sich lediglich durch die Gestaltung des Kontaktkörpers 17a, der an der Außenseite seines zylindrischen Abschnittes 23a mit einer Rändelung versehen ist. Diese umgibt den zylindrischen Abschnitt 23a ringförmig und ist im Bereiche des Leiters 9 angeordnet. Während der Kontaktkörper 17a an seiner Außenseite einen vorgeformten flachen Kopf 31 aufweist, ist er an seiner innenliegenden Seite mit einem hohlzylindrischen Schaft 32 versehen, der nach der Innenseite über den Kunststoffkörper 4 vorsteht. Auf dem Schaft sitzt ein Dichtring 33, der mittels einer Unterlegscheibe 34 an den Kunststoffkörper 4 angepreßt ist. Die Unterlegscheibe 34 wird durch einen Nietrand 35 des insgesamt nach Art eines Hohlnietes ausgebildeten Kontaktkörpers 17a gehalten.

Während der Kopf 31 infolge einer an seiner dem Kunststoffkörper 4 zugewandten Seite vorgesehenen Hinterschneidung eine in den Kunststoffkörper einschneidende und damit abdichtende Kante 36 aufweist, stellt der vorzugsweise aus Gummi bestehende Dichtring 33 eine zuverlässige Abdichtung des Spaltes zwischen der Bohrung 19 und dem zylindrischen Abschnitt 23a bestehenden Spaltes dar.

Die Bohrung 19 ist ursprünglich zylindrisch und wird durch die Rändelung 29 des Kontaktkörpers 17a, insbesondere im Bereich des Leiters 9, radial nach außen verformt. In der Rändelung 29 enthaltene, radial nach außen vorstehende Vorsprünge deformieren dabei die Schnittflächen der einzelnen, den Leiter 9 bildenden Drähte 11, 12, 13, 14, so daß eine innige Berührung zwischen dem Leiter 9 und dem Kontaktkörper 17 erhalten wird.

In einer abgewandelten und nicht weiter dargestellten Ausführungsform sind die Drähte 11, 12, 13, 14 durch einen oder mehrere massive Leiter wie bspw. einen Kupferkörper ersetzt, dessen Dicke einem Drahtdurchmesser entspricht und dessen Breite ein Mehrfaches des Drahtdurchmessers ist. Es kann dies eine dicke Folie sein, die bei der Bohrung ein Loch hat, durchtrennt oder angeschnitten ist.

Bei einem Kunststoffschutzblech, das etwa mittig wenigstens eine Metallfolie enthält, ist in Nachbarschaft zu der Metallfolie ein elektrischer Leiter angeordnet, dessen Dicke erheblich größer ist als die der Metallfolie. Die Dicke ist dabei so groß, daß der bei einer den Leiter durchtrennenden Öffnung gemessene mechanische Widerstand gegen radiale Aufweitung der Öffnung an den Schnittflächen des geschnittenen Leiters deutlich größer ist als der Widerstand des übrigen Kunststoffschutzbleches. Dieser Bemessungsregel folgend können dickere Kupferstreifen oder Kupferdrähte mit Durchmessern ab 0,2 mm als Leiter verwendet werden. Eine Kontaktierung nach außen wird mittels einer in die genannte Öffnung eingesetzten und mit dem Schutzblech vernieteten oder anderweitig verbundenen Buchse hergestellt, an deren Außenumfang die Schnittflächen des Leiters unter Druck anliegen.

**Patentansprüche**

1. Schutzblech (1), insbesondere als Radkotschützer für Zweiräder,

   mit einem Grundkörper, der als Radabdeckung ausgebildet und aus Kunststoff aufgebaut ist, so daß ein einstückiger Kunststoffkörper (4) ausgebildet ist,

   mit einer zum Anschluß einer Kontaktierungseinrichtung (17) dienenden Öffnung (19), die den Kunststoffkörper (4) durchsetzt,

   mit wenigstens einem länglich ausgebildeten Leiter (9), der sich entlang der Längsrichtung (2) des Schutzbleches (1) erstreckend bei der Öffnung angeschnitten oder durchtrennt ist und dessen Dicke derart bemessen ist, daß der bei der Öffnung (19) gemessene mechanische Widerstand gegen radiale Aufweitung der Öffnung (19) an der Schnittfläche des geschnittenen Leiters (9) deutlich größer ist als der des Kunststoffes.

2. Schutzblech nach Anspruch 1, dadurch gekennzeichnet, daß es wenigstens eine Metallfolie (6) enthält, die sich entlang einer Längsrichtung (2) des Schutzbleches (1) erstreckend in den Kunststoffkörper (4) eingelagert ist.

3. Schutzblech nach Aspruch 1, dadurch gekennzeichnet, daß der länglich ausgebildete Leiter aus einem anderen Metall besteht als die Metallfolie (6).

4. Schutzblech nach Anspruch 1 und 3, dadurch gekennzeichnet, daß der Leiter dicker als die Metallfolie (6) ausgebildet ist.

5. Schutzblech nach Anspruch 2, dadurch gekennzeichnet, daß das Schutzblech (1), das der Wölbung eines Rades folgend ausgebildet ist, zwei endständige Schmal- oder Stirnseiten aufweist, zwischen denen sich sowohl die Metallfolie (6) als auch der dickere Leiter (9) erstrecken.

6. Schutzblech nach Anspruch 1, dadurch gekennzeichnet, daß der Leiter (9) von wenigstens einem Draht (11) gebildet ist.

7. Schutzblech nach Anspruch 2, dadurch gekennzeichnet, daß der Leiter (9) über seine Länge von der Metallfolie (6) isoliert ist.

8. Schutzblech nach Anspruch 2, dadurch gekennzeichnet, daß der Leiter (9) mit der Metallfolie (6) in elektrischem Kontakt steht.

9. Schutzblech nach Anspruch 2, dadurch gekennzeichnet, daß der Kunststoffkörper (4) insgesamt wenigstens zwei Öffnungen (19) aufweist, die sowohl die Metallfolie (6) als auch den wenigstens einen Leiter (9) durchsetzen.

10. Schutzblech nach Anspruch 1, dadurch gekennzeichnet, daß die Öffnung (19) eine glattwandige, durch Stanzen hergestellte Öffnung ist.

11. Schutzblech nach Anspruch 1, dadurch gekennzeichnet, daß die elektrische Kontaktierungeinrichtung (17) ein ortsfest mit wenigstens einem Abschnitt (23) in der jeweiligen Öffnung (19) sitzender Kontaktkörper ist, der im Bereich der Öffnung (19) eine zylindrische Außenfläche aufweist.

12. Schutzblech nach Anspruch 11, dadurch gekennzeichnet, daß die zylindrische Außenfläche des Kontaktkörpers (17) einen Außendurchmesser aufweist, der größer ist als der Innendurchmesser der Öffnung (19).

13. Schutzblech nach Anspruch 11, dadurch gekennzeichnet, daß die zylindrische Außenfläche des Kontaktkörpers (17a) wenigstens abschnittsweise eine Rändelung (29) aufweist.

14. Schutzblech nach Anspruch 1, dadurch gekennzeichnet, daß die Kontaktierungseinrichtung (17) aus einem Material besteht, dessen elektrochemisches Potential mit dem des massiven Leiters (9) wenigstens annähernd übereinstimmt.

15. Schutzblech nach Anspruch 2, dadurch gekennzeichnet, daß die Metallfolie (6) aus einem Metall besteht, dessen elektrochemisches Potential negativer ist, als das elektrochemische Potential des massiven Leiters (9).

16. Schutzblech nach Anspruch 1, dadurch gekennzeichnet, daß die Metallfolie (6) aus einem Metall besteht, dessen elektrochemisches Potential negativer ist als das elektrochemische Potential der Kontaktierungseinrichtung (17).

17. Schutzblech, insbesondere als Radkotschützer für Zweiräder,

mit einem Grundkörper, der als Radabdeckung ausgebildet und aus Kunststoff aufgebaut ist, so daß ein einstükkiger Kunststoffkörper (4) ausgebildet ist,

mit wenigstens einer Metallfolie (6), die sich entlang einer Längsrichtung (2) des Schutzbleches (1) erstreckend in den Kunststoffkörper (4) eingelagert ist,

mit wenigstens einem länglich ausgebildeten Leiter (9), der aus einem anderen Metall besteht als die Metallfolie (6), der sich entlang der Längsrichtung (2) des Schutzbleches (1) erstreckend in den Kunststoffkörper (4) eingelagert ist und der dicker als die Metallfolie (6) ausgebildet ist.

Fig. 1

EP 0 755 851 A2

Fig. 2

EP 0 755 851 A2

Fig. 3

Fig. 4